Europäisches Patentamt

**European Patent Office**

Office européen des brevets

(11) Publication number: **0 143 664**
**B1**

# EUROPEAN PATENT SPECIFICATION

(45) Date of publication of patent specification: **13.06.90**

(21) Application number: **84308285.0**

(22) Date of filing: **29.11.84**

(51) Int. Cl.⁵: **G 01 S 15/89,** G 01 S 15/02, G 01 S 7/52, A 61 B 8/00

(54) Ultrasonic characterisation of a Medium.

(30) Priority: **30.11.83 JP 225666/83**

(43) Date of publication of application:
**05.06.85 Bulletin 85/23**

(45) Publication of the grant of the patent:
**13.06.90 Bulletin 90/24**

(84) Designated Contracting States:
**DE FR GB NL SE**

(56) References cited:
**US-A-4 052 889**

IEEE TRANSACTIONS ON INFORMATION THEORY, vol. IT-18, no. 6, November 1972, pages 745-759, IEEE, New York, US; R.C. KEMERAIT et al.: "Signal detection and extraction by cepstrum techniques"

IEEE TRANSACTIONS ON SONICS AND ULTRASONICS, vol. SU-23, no. 5, September 1976, pages 329-333, IEEE, New York, US; N.M. BILGUTAY et al.: "Evaluation of a random signal correlation system for ultrasonic flaw detection"

(73) Proprietor: **FUJITSU LIMITED**
**1015, Kamikodanaka Nakahara-ku**
**Kawasaki-shi Kanagawa 211 (JP)**

(72) Inventor: **Shimura, Takaki** c/o FUJITSU LIMITED Patent Department 1015 Kamikodanaka Nakahara-ku Kawasaki-shi Kanagawa 211 (JP)
Inventor: **Murakami, Keiichi** c/o FUJITSU LIMITED Patent Department 1015 Kamikodanaka Nakahara-ku Kawasaki-shi Kanagawa 211 (JP)
Inventor: **Igarashi, Yutaka** c/o FUJITSU LIMITED Patent Department 1015 Kamikodanaka Nakahara-ku Kawasaki-shi Kanagawa 211 (JP)
Inventor: **Shiba, Akira** c/o FUJITSU LIMITED Patent Department 1015 Kamikodanaka Nakahara-ku Kawasaki-shi Kanagawa 211 (JP)
Inventor: **Hayashi, Hajime** c/o FUJITSU LIMITED Patent Department 1015 Kamikodanaka Nakahara-ku Kawasaki-shi Kanagawa 211 (JP)
Inventor: **Miwa, Hirohide** c/o FUJITSU LIMITED Patent Department 1015 Kamikodanaka Nakahara-ku Kawasaki-shi Kanagawa 211 (JP)
Inventor: **Inoue, Michitoshi** c/o FUJITSU LIMITED Patent Department 1015 Kamikodanaka Nakahara-ku Kawasaki-shi Kanagawa 211 (JP)

Courier Press, Leamington Spa, England.

**EP 0 143 664 B1**

(56) References cited:
ULTRASONICS, vol. 20, no. 2, February 1982, pages 82-86, Butterworth & Co. Publishers Ltd., Guilford, Surrey, GB; F.G. SOMMER et al.: "Stochastic frequency-domain tissue characterization: application to human spleens 'in vivo'"

ULTRASONIC TISSUE CHARACTERIZATIOBN II, special publication, no. 525, 1979, pages 287-295, National Bureau of Standards, Washington, DC, US; J. FRASER et al.: "Cepstral signal processing for tissue signature analysis"

1978 IEEE INTERNATIONAL CONFERENCE ON ACOUSTICS, SPEECH & SIGNAL PROCESSING: RECORD, 10th-12th April 1978, Oklahoma, IEEE, New York, US; R. SHANKAR et al.: "Ultrasonic measurement of defects in metals using cepstral processing"

PHYSICS IN MEDICINE AND BIOLOGY, vol. 22, no. 3, 1977, pages 431-443, US; J.C. GORE et al.: "Echo structure in medical ultrasonic pulse-echo scanning"

IEEE TRANSACTIONS ON AUDIO AND ELETROACOUSTICS, vol. AU-16, no. 3, September 1968, pages 437-466, IEEE, New York, US; A.V. OPPENHEIM et al.: "Nonlinear filtering of multiplied and convolved signals"

(72) Inventor: **Matsumoto, Masayuki c/o FUJITSU LIMITED**
**Patent Department 1015 Kamikodanaka**
**Nakahara-ku Kawasaki-shi Kanagawa 211 (JP)**

(74) Representative: **Sunderland, James Harry et al**
**HASELTINE LAKE & CO Hazlitt House 28**
**Southampton Buildings Chancery Lane**
**London WC2A 1AT (GB)**

**Description**

This invention relates to ultrasonic characterisation of a medium, for example living tissue, and particularly to ultrasonic diagnostic apparatus providing so-called tissue characterisation by reflected ultrasonic waves (hereinafter referred to as "reflection type ultrasonic wave TC") which is capable of characterising an ultrasonic wave medium to be observed, more definitely living tissue, using the ultrasonic waves reflected from the ultrasonic wave medium to be observed.

Recently, efforts are being made to provide for TC which is capable of discriminating kinds of tissues and good and bad characteristics of tissues, rather than so-called B mode ultrasonic diagnosis apparatus which assists diagnosis by indicating shapes of tissues for example within a human body.

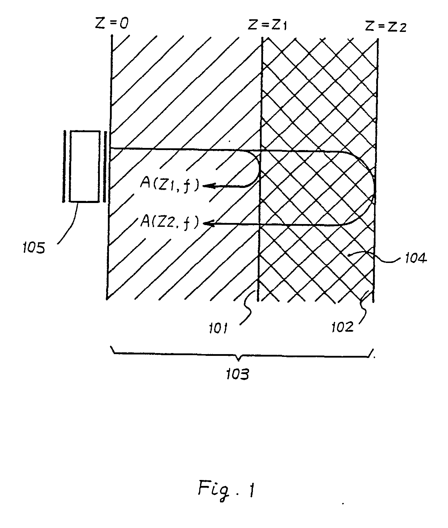

Previous reflection type ultrasonic TC has most often involved the use of attenuation characteristics as the parameters employed for discriminating characteristics of living tissues, for example for discriminating whether a liver is healthy or is suffering from cirrhosis. The basis for this is found in the phenomenon that as an ultrasonic wave travels a distance $\Delta z$ in a medium, sound pressure of the wave is attenuated by $EXP\{-\alpha(z,f)\Delta z\}$, with $\alpha(z,f)$ taken to be a factor (constant) which changes depending on place (location in the medium) and frequency (of the ultrasonic wave). For example, as shown in Fig. 1, in order to determine the attenuation characteristic of a region 104 between reflecting surfaces 101 and 102 in an ultrasonic wave medium 103 to be observed, an ultrasonic wave is transmitted into the medium from an ultrasonic vibration unit 105 placed at a position corresponding to $Z = 0$ and ultrasonic waves reflected from the reflecting surfaces 101 and 102 at positions $Z = Z_1$ and $Z = Z_2$ in the medium are received. If the power spectrum of a received signal corresponding to reflection from the reflecting surface 101 is taken to be $A(Z_1,f)$ and the power spectrum of a received signal corresponding to reflection from the reflecting surface 102 is taken to be $A(Z_2,f)$, and if the characteristics of the reflecting surfaces (reflection coefficients, etc) are the same, an attenuation characteristic $\alpha(z,f)$ can be obtained from the following:—

$$A(Z_2, f) = A(Z_1, f) \ \{e^{-2\alpha(\frac{Z_1 + Z_2}{2},f)}(Z_2 - Z_1)\}^2$$

$$= A(Z_1, f) \ e^{-4\alpha(\frac{Z_1 + Z_2}{2},f)}(Z_2 - Z_1)$$

$$\alpha((Z_1 + Z_2)/2, \ f) \ = \ \frac{\log A(Z_1,f) - \log A(Z_2,f)}{4(Z_2 - Z_1)}$$

$$\dots\dots\dots (1)$$

It is possible also to obtain this attenuation characteristic without obtaining the power spectrums involved in the above equations.

However, the use of such attenuation characteristics as the parameters employed for medium (tissue) characterisation involves the following difficult problems.

First, in a case in which the reflecting surfaces 101, 102 shown in Fig. 1 have different frequency characteristics, the attenuation characteristic $\alpha(z,f)$ obtained from equations (1) is calculated as a frequency dependent characteristic different from that of the intrinsic (the frequency dependence of which is not related to the intrinsic characteristics of) region 104 to be observed.

Second, an attenuation characteristic has a dependency on frequency of about 1 dB/MHz/cm in ordinary living tissue. However, an attenuation difference of only 2 dB or so occurs between the upper and lower limits of (most attenuated wave and least attenuated wave from) the region to be observed (such as region 104 in Fig. 1) even when an ultrasonic wave having a bandwidth of about 1 MHz is used and travels out and returns through living tissue of about 1 cm thickness. The attenuation difference can therefore be hidden by spectrum disturbances arising due to disturbances of ultrasonic wave beam pattern and it is difficult to obtain a meaningful attenuation characteristic in this context. For practical use, it is necessary that the tissue observed must be thick and an average of a large amount of data must be obtained, thus degrading space and time resolution.

Attention is directed to EP—A2—0 119 844, which forms part of the state of the art by virtue of Article 54(3) EPC.

A paper by F. G. Sommer, et al, in ultrasonics, March 1982, pages 82 to 86, discloses a frequency domain tissue characterisation procedure in which received ultrasonic signals are Fourier transformed and the resultant frequency spectra subject to autocorrelation. A first autocorrelation peak (not at the origin) is detected and from this a mean tissue scatterer spacing derived.

A paper by J. Fraser and G. S. Kino, in Ultrasonic Tissue Characterisation II, National Bureau of Standards, Spec. Publ. 525 (1979), pages 287 to 295, discloses an experimental analysis technique embodying the features of the precharacterising part of claim 1 as well as those of claim 3.

According to one aspect of the present invention there is provided an apparatus for transmitting an ultrasonic wave into a medium and for receiving and processing the ultrasonic wave as reflected in the medium, for obtaining a value of a parameter which value is dependent upon the spacing between small reflecting bodies dispersedly distributed in a region of the medium to be observed and characterises the region of the medium to be observed, the apparatus comprising:

(a) means for extracting a time section of a receiving signal corresponding to the ultrasonic wave as reflected in the medium,

(b) means for obtaining a power spectrum of the extracted time section of the receiving signal,

(c) means for obtaining a logarithmic power spectrum from the said power spectrum, and

(d) means for obtaining a cepstrum of the logarithimic power spectrum, characterised in that the apparatus further comprises

(e) means for detecting a quefrency corresponding approximately to a peak value, other than at the origin, of the cepstrum, and

(f) means for obtaining an nth-order moment $M_n$ of a restricted range of the cepstrum around the said quefrency.

According to the invention there is also provided a method of characterising a region of a medium to be observed, comprising transmitting an ultrasonic wave into a medium and receiving and processing the ultrasonic wave as reflected in the medium, and obtaining a value of a parameter which value is dependent upon the spacing between small reflecting bodies dispersedly distributed in a region of the medium to be observed and characterises the region of the medium to be observed, the method comprising:

(a) extracting a time section of a receiving sigal corresponding to the ultrasonic wave as reflected in the medium,

(b) obtaining a power spectrum of the extracted time section of the receiving signal,

(c) obtaining a logarithmic power spectrum from the said power spectrum, and

(d) obtaining a cepstrum of the logarithmic power spectrum, characterised by

(e) detecting a quefrency corresponding approximately to a peak value, other than at the origin, of the cepstrum, and

(f) obtaining an nth-order moment $M_n$ of a restricted range of the cepstrum around the said quefrency.

An embodiment of this invention can provide for discrimination between normal and abnormal conditions of tissues, using characteristic values relating to tissue structure, such as average interval of fine structure in the tissues, etc., as parameters for the discrimination, in place of attenuation characteristics. This is applicable, for example, in relation to tissues, the fine structure of which changes due to a disease. For example, in the case of the myocardium, the fibrous nature thereof increases when myocardial infarction occurs.

An embodiment of this invention can provide that parameters indicating fine structure of tissue are obtained easily with good accuracy.

An embodiment of the present invention is based on the phenomenon that when an ultrasonic wave is reflected from adjacent reflecting bodies in a medium (e.g. living tissue) superposed reflected waveforms are received and a characteristic waving or oscillatory phenomenon called scalloping appears on the power spectrum of a received signal.

Reference is made, by way of example, to the accompanying drawings, in which:

Fig. 1 is a schematic diagram for assistance in explanation of ultrasonic wave reflection in a medium, for assistance in the explanation of ultrasonic characterisation on the basis of attenuation characteristics,

Fig. 2A is a schematic diagram of ultrasonic wave reflection in a medium, for assistance in explanation of the present invention,

Figs. 2B to 2D are respective graphs for assistance in explaining the form of power spectrum of a received signal that has been subjected to ultrasonic wave reflection as illustrated in Fig. 2A,

Fig. 3 is a graph illustrating the power spectrum of a received signal that has been subjected to ultrasonic wave reflection in a medium containing many fine reflecting bodies,

Fig. 4 is a schematic block diagram of apparatus in accordance with an embodiment of the present invention,

Fig. 5 is a graph illustrating the cepstrum corresponding to the power spectrum of Fig. 3,

Fig. 6 is a schematic block diagram of another embodiment,

Fig. 7 is a waveform diagram of a received signal, for assistance in explanation of another embodiment of the present invention, using a "sliding window",

Fig. 8 is a schematic block diagram of apparatus for obtaining a uni-dimensional distribution of medium characterising parameters along an ultrasonic scanning line,

Figs. 9A and 9B are respective schematic diagrams illustrating examples of forms of displays which can be provided with the apparatus of Fig. 8,

Figs. 10A and 10B are schematic block diagrams of respective examples of arrangements which can be employed for providing a display as illustrated in Fig. 9B, and

Fig. 11 is a schematic block diagram of another embodiment for obtaining a two or three dimensional distribution of medium characterising parameters.

First a principle employed in the present invention will be described, then embodiments of the invention will be described, with reference to the drawings.

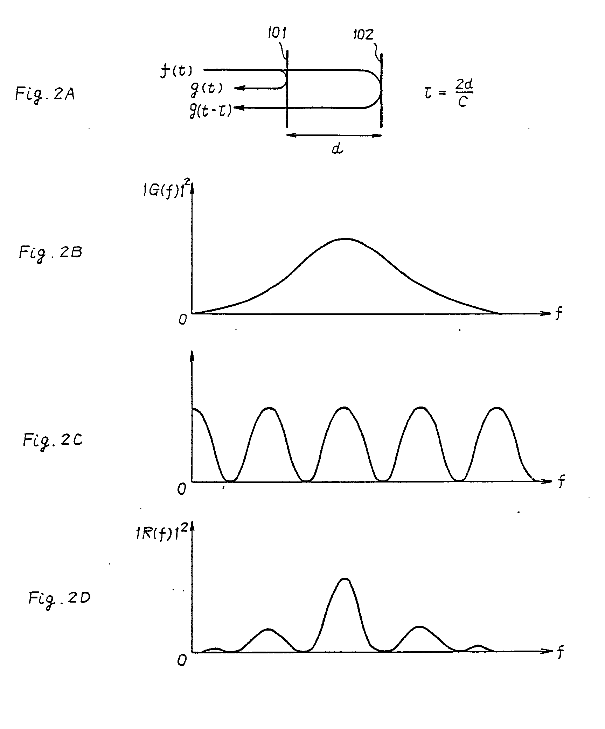

In general, as shown in Fig. 2A, when an incoming wave (incident wave) f(t) is reflected by consecutive reflecting surfaces 101, 102 a receiving signal r(t) corresponding to the superimposition of a wave g(t) reflected from the surface 101 and a wave (t − τ) reflected from the surface 102 can be obtained. (Attenuation by transmission is neglected here). Thus

$$r(t) = g(t) + g(t - \tau) \tag{2}$$

where, τ = 2d/c, and c is sound velocity and d is the interval (spacing) between the reflecting surfaces 101 and 102.

Equation (2) can be modified by Fourier transformation.

$$R(f) = \int_{-\infty}^{\infty} \{g(t) + g(t-\tau)\} e^{-j2\pi ft} \, dt$$

$$= G(f) + e^{-j2\pi f\tau} \cdot G(f)$$

$$= G(f) (1 + e^{-j2\pi f\tau}) \quad \ldots\ldots\ldots\ldots\ldots\ldots\ldots\ldots\ldots \tag{3}$$

Where, R(f) is the Fourier transformation of r(t) and G(f) is the Fourier transformation of g(t).
Accordingly, the power spectrum of the receiving signal can be expressed as follows:—

$$|R(f)|^2 = |G(f)|^2 (2 + 2 \cos 2\pi f\tau) \tag{4}$$

This corresponds to power spectrum $|G(f)|^2$ as shown in Fig. 2B with distortion, corresponding to the factor $2 + 2 \cos 2\pi f\tau$ in equation (4), as shown in Fig. 2C and the result is that the power spectrum of the receiving signal is subject to a waving phenomenon or oscillatory effect, as shown in Fig. 2D. This waving phenomenon or oscillatory effect is called scalloping. In this case, a period Δf of the oscillations of the oscillatory effect is expressed as,

$$\Delta f = 1/\tau = c/2d \tag{5}$$

and when Δf is known, the value of d can be obtained because c is already known. It is of course possible in embodiments of the present invention to use Δf as well as d as a parameter for indicating medium (e.g. tissue) characteristics.

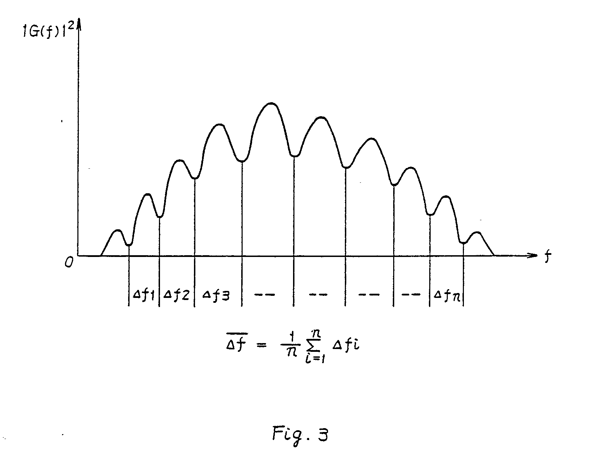

Actual living tissue, for example, does not have a simple double-layer reflecting structure as described above; many fine reflecting bodies having different reflection coefficients are arranged with a variety of different spacings between the bodies, and a power spectrum as shown in Fig. 3 can be observed. An average period of oscillations in the spectrum almost corresponds to the average interval of reflecting bodies in the tissue. That is, oscillation periods $\Delta f_1$ to $\Delta f_n$ can be seen in the spectrum of Fig. 3, and the average

$$\overline{\Delta f} = \frac{1}{n} \sum_{i=1}^{n} \Delta f_i$$

of these periods corresponds approximately to the average spacing of reflecting bodies in the tissue. Therefore, an average interval (spacing) of reflecting bodies in a region to be observed can be obtained by finding an average period $\overline{\Delta f}$ of the waving phenomenon or oscillatory effect and an effective diagnostic method can be provided in respect of a region where the effects of disease cause a difference or change in the average interval (spacing) of reflecting bodies. Such a diagnostic method is effective for diagnosis relating to a region such as the myocardium and a disease such as myocardial infarction. The myocardium generally has almost homogeneous muscle layering. In its normal condition, an average interval $\overline{d}$ of reflecting bodies appears very small and since in this case an average value $\overline{\Delta f}$ of the scalloping period is very large, the waving phenomenon or oscillatory effect is not very pronounced in the power spectrum of a receiving signal. However, if myocardial infarction occurs, the tissue becomes fibrous and moreover since the intervals (spacings) of fibers have a certain size, the waving phenomenon or oscillatory effect becomes manifest or distinctive in the spectrum. The degree of myocardial infarction can be estimated by determining the interval Δf of the waving phenomenon or oscillatory effect.

The intervals Δfi appearing due to the waving phenomenon or oscillatory effect in the spectrum actually differ slightly from each other. Either average values of such intervals or values representing the degree of variation or fluctuation of the sizes of the intervals can be used in accordance with embodiments of the present invention for medium (tissue) characterisation (and diagnosis). For example, frequencies corresponding to peaks and valleys in the shape of the spectrum are detected, differences $\Delta fi$ between these frequencies are obtained and moreover an average of these differences $\Delta fi$ is obtained. However, these calculations are comparatively troublesome and each peak of spectrum is not always single. Namely, each peak may itself suffer waving or oscillations and it is therefore difficult in some cases to accurately determine the position (frequency) of the peak.

Embodiments of the present invention provide for the use of the cepstrum for accurately and easily obtaining $\overline{\Delta f}$.

A cepstrum is obtained when a spectrum is logarithmically compressed and then transformed by Fourier transformation. Since the cepstrum is a known concept, detailed explanation thereof will be omitted. For details, refer to A. V. Oppenheim, R. W. Schafer, "Digital Signal Processing", pp 500 to 507, Prentice-Hall, 1975.

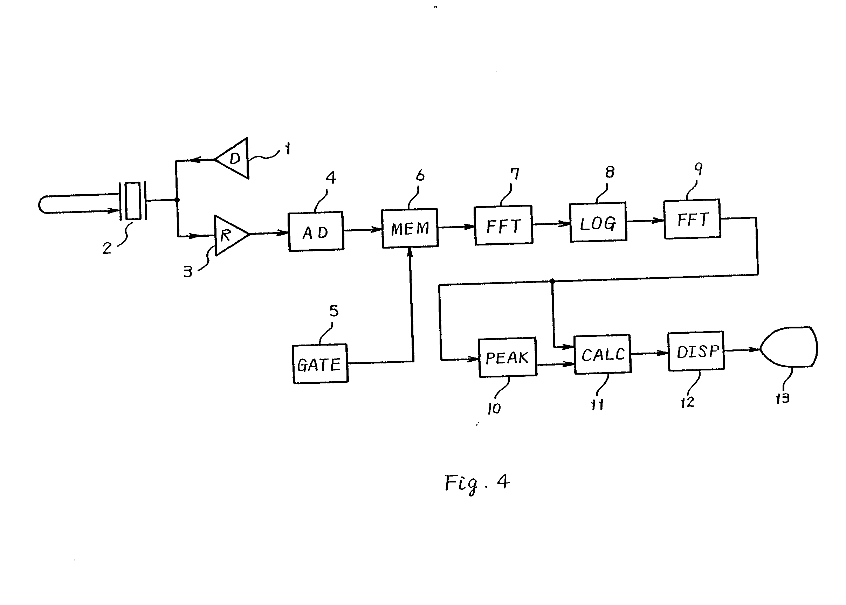

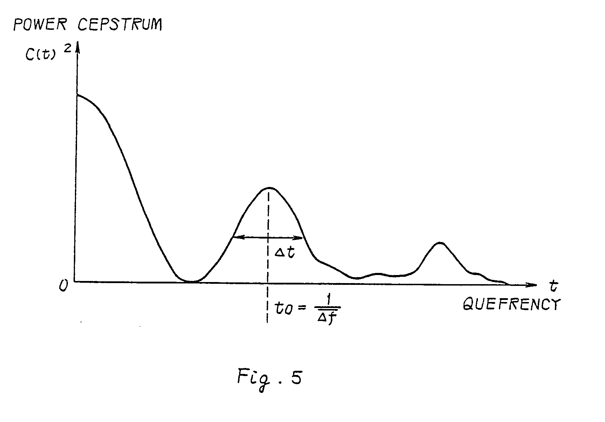

Fig. 4 is a schematic block diagram of apparatus in accordance with an embodiment of the present invention using a cepstrum. In response to a driving signal sent from a transmitter 1, a vibration unit 2 sends an ultrasonic wave into a medium (living tissue) to be observed. Reflected waves are received again by the vibration unit 2 and amplified by a receiver 3 and thereafter sent to an analog-to-digital converter (hereinafter referred to as an AD converter). It is a matter of course that so-called TGC (Time Gain Control) amplification, logarithmic amplification or AGC (Auto-Gain Control) amplification may be employed for the amplification process. An output of AD converter 4 is, for example, stored in a memory 6, only in respect of a period designated by an output of a gate timing generating circuit 5 which turns ON only when a reflected wave is being received from a region of interest in the medium, for example the wall of the heart. In this case, the AD converter must naturally be operated with a frequency (for example, 3.5 MHz × 4 = 14MHz or more) which is sufficiently higher than the ultrasonic wave frequency (for example, 3.5 MHz) used. The content of memory 6 is sent to a Fourier transformation circuit 7 for calculation of a power spectrum. The Fourier transformation circuit 7 (and Fourier transformation circuit 9 referred to below) can be realized, for example, by an LSI circuit for signal processing comprising a multiplier, accumulator, data memory and a control memory, etc. An output Fourier transformation circuit 7 is sent again to another Fourier transformation circuit 9 through a logarithmic converter 8 and thereby a power cepstrum $|C(t)|^2$ can be obtained as an output of circuit 9. Fig. 5 shows a power cepstrum $|C(t)|^2$ corresponding to power spectrum of Fig. 3. A peak detector 10 obtains a frequency $t_0$ which corresponds almost (approximately) to a peak value (other than the origin) of the power cepstrum. $t_0$ is shown for the cepstrum of Fig. 5. Since $|C(t)|^2$ is obtained by Fourier transformation of the logarithms of $|G(f)|^2$, $t_0$ is almost (approximately or substantially) equal to an inverse of an average period $\overline{\Delta f}$ of scalloping of the power spectrum shown in Fig. 3.

In the calculating circuit 11, an average value of the scalloping interval (the period of oscillations of the power spectrum), which is employed as a medium (e.g. tissue) characterising parameter, can be obtained from the equation indicated below.

$$\overline{\Delta f} = 1/t_0 \tag{6}$$

It is also possible to obtain

$$\overline{d} = c/2\overline{\Delta f} = ct_0/2 \tag{7}$$

from the equation (5).

The spread of the cepstrum around the peak value, as indicated by $\Delta t$ of Fig. 5, corresponds to fluctuation of the frequency intervals $\Delta fi$ (i = 1 to n, see Fig. 3) of the scalloping of the power spectrum of Fig. 3. Accordingly, the fluctuation of $\Delta fi$ can be estimated by obtaining the dispersion of the cepstrum around $t_0$ in a range ($t_0 - T$, $t_0 + T$, where T is predetermined constant) of time duration predetermined around $t_0$, namely the secondary moment

$$m_2 = \int_{t_0-T}^{t_0+T} (t-t_0)^2 \, |C(t)|^2 \cdot dt \quad \ldots\ldots\ldots\ldots (8)$$

can be obtained and it can also be used as a medium (e.g. tissue) characterising parameter.

Moreover, an nth order moment (n = 1, 2, 3, . . .) can also be used as a characterising parameter. The calculation circuit 11 of Fig. 4 performs calculation of such a moment with the cepstrum which is output from the Fourier transformation circuit 9 as input. A result obtained by the calculation circuit 11 is sent to a display circuit 12 and is finally sent to a display 13.

The logarithmic converter 8 of Fig. 4 can be provided as a code converter using ROM (Read Only Memory), whilst the peak detector 10 can be provided as an LSI circuit for signal processing as in the case of the Fourier transformers 7 and 9. In a case in which high speed processing is not particularly required, it

6

is a matter of course that the circuits from 7 to 11 can be realised using a programmable LSI for signal processing (a so-called micro-computer).

The value $t_0$ in Fig. 5 indicates almost (aproximately or substantially) an average value of the intervals between reflecting bodies in the medium observed and therefore if a self-correlation function of a receiving signal is obtained, a peak of the self-correlation must appear when a time deviation $\tau$ is equal almost (approximately or substantially) to $t_0$.

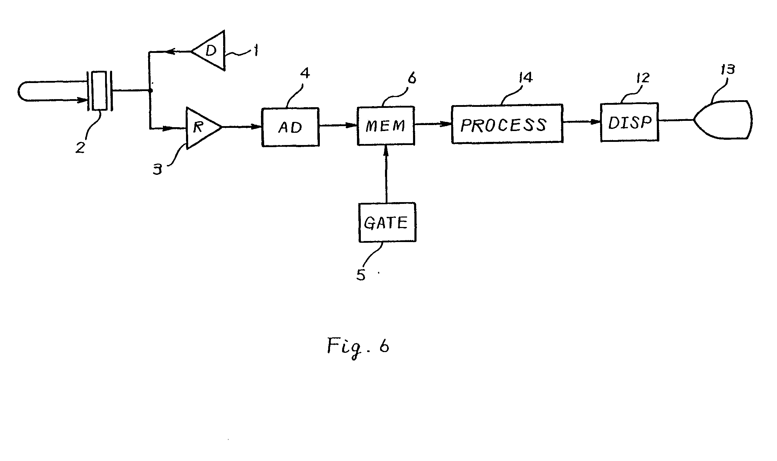

Fig. 6 illustrates apparatus in which self-correlation is employed. In Fig. 6, items 1 to 6, 12 and 13, correspond generally to items given similar reference signs in Fig. 4.

In the apparatus of Fig. 6, a receiving signal f(t) corresponding to a selected region to be observed is stored in the memory 6 and a self-correlation as expressed by the following equation is obtained at a signal processing circuit 14 in respect of such memory content:—

$$\phi(\tau) = \int_{t_1}^{t_2} f(t) . f(t-\tau) \, dt \dots \dots \dots (9)$$

where, $t_1$, $t_2$ relate to time sections in respect of which signals are received from the selected depths. When a time deviation $\tau_0$ which gives almost (approximately or substantially) a first peak value (except for the origin) of $\phi(\tau)$ is obtained, it is almost (approximately or substantially) equal to $t_0$ of Fig. 5. In apparatus used to constitute such an embodiment of the present invention it is sufficient for a processing program of signal processing circuit 14 to be prepared for obtaining a self-correlation and also for obtaining a time deviation $(\tau)$ which gives the first peak value except for the origin.

Regarding display of results obtained, $t_0$, $\overline{\Delta f}$, $m_2$, $\tau_0$ may be displayed as numerals (in units of sec, MHz, etc). Such a display can easily be realized by providing a character pattern generating function in the display control circuit 12 of Fig. 4 or Fig. 6.

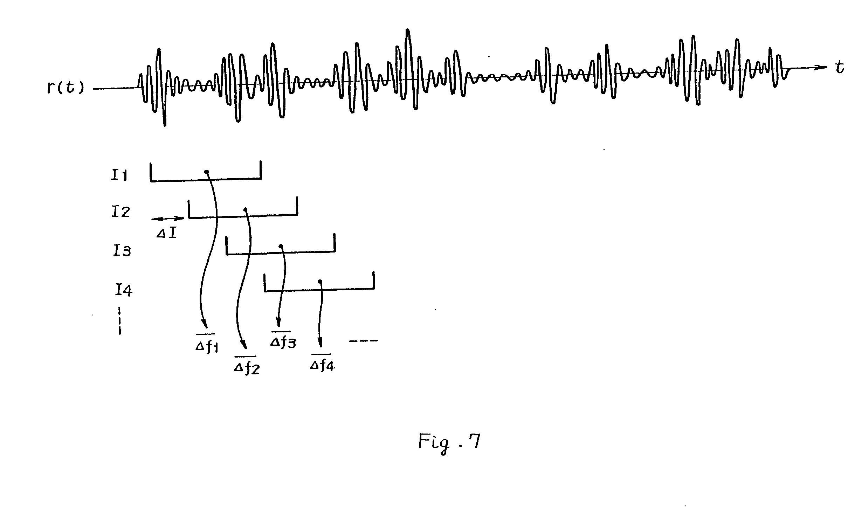

Furthermore, distributions of $t_0$, $\overline{\Delta f}$, $m_2$, $\tau_0$ along an ultrasonic scanning line can also be obtained. As illustrated in Fig. 7, this can be achieved using a so-called sliding window method in which portions of receiving signals r(t), sequentially delayed, like $l_1$, $l_2$, $l_3$, ... in Fig. 7, with a small delay time $\Delta l$ and the transmission time is divided into the superimposing time sections. When values of parameters such as $t_0$, $\overline{\Delta f}$, $m_2$, $\tau_0$ obtained as described above using signals corresponding to each time section are displayed on the assumption that these values relate to the center of each section, a parameter distribution along an ultrasonic scanning line can thus be obtained.

When using such a method, not only the reflected wave data of one processing section (e.g. $l_1$ or $l_2$ etc) but all data relating to a scanning line is first stored in the memory (e.g. memory 6) and thereafter $t_0i$, $\overline{\Delta f_i}$, $m_{2i}$, $\tau_{0i}$ (i −1, 2, 3, . . .) are obtained in respect only of signals pertaining to the required time sections $l_i$ (i = 1, 2, 3, . . .) and the obtained results are sent to a memory for display.

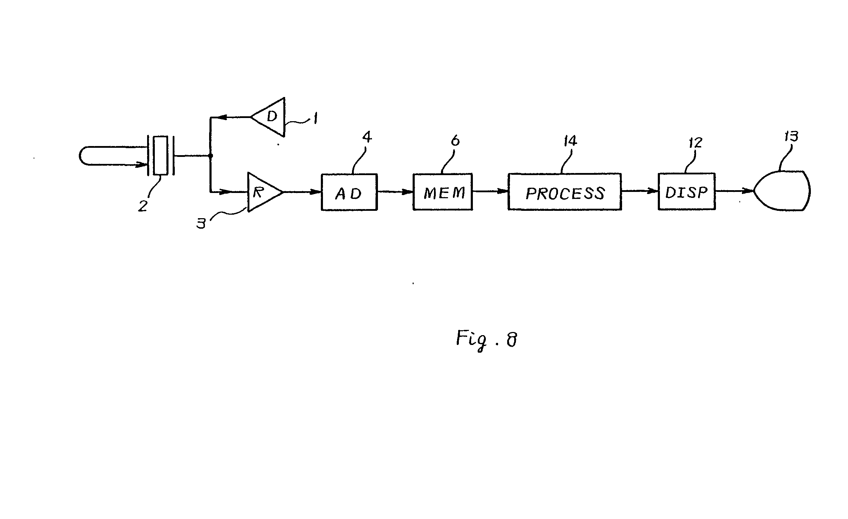

Constitution of an apparatus in which distribution over a scanning line is obtained is shown in Fig. 8. This embodiment is different from that of Fig. 6 in that the gate timing generating circuit 5 of Fig. 6, which picks out which particular time section of receiving signals for storage in memory 6, is eliminated and the receiving signals are all stored for each time section of interest.

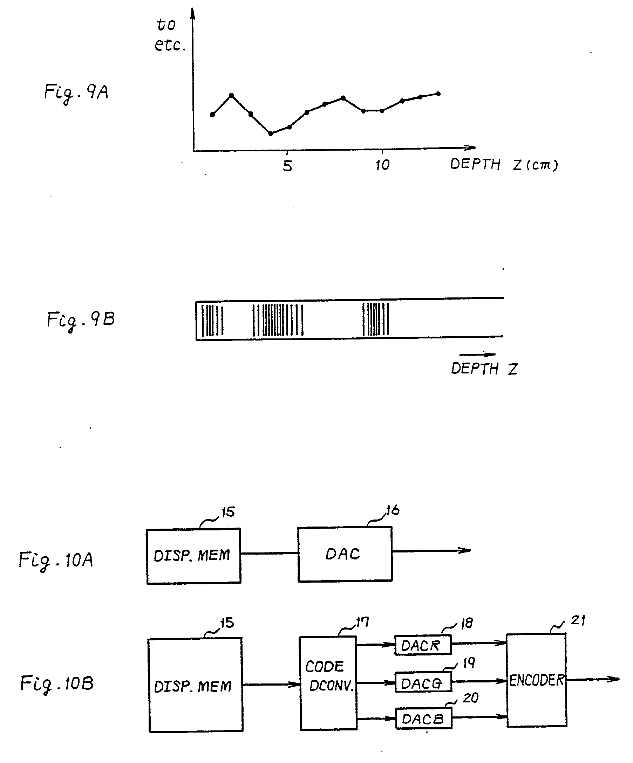

Regarding the display of distributions of $t_0$, $\overline{\Delta f}$, $m_2$ and $\tau_0$, these can be displayed in graphical form with a diagnostic distance (depth from the surface of the medium (e.g. body) observed) plotted on one axis of a rectangular coordinate plot as shown in Fig. 9A and values of a parameter ($t_0$, $\overline{\Delta f}$, etc) obtained by signal processing plotted on the other axis. Changes in value of a parameter in dependence upon the diagnostic distance can easily be recognised with such a display method. To provide such a display with an embodiment similar to that of Fig. 8 it is necessary to provide a so-called frame memory for bit mapping the display 12 of Fig. 8 in order to store a graphic pattern as shown in Fig. 9.

As shown in Fig. 9B, it is also possible that distribution of parameters on an ultrasonic wave scanning line can be displayed by assigning corresponding brightnesses or colors to parameter values obtained by signal processing. To provide such a display with an embodiment similar to that of Fig. 8, a circuit for brightness modulation or colour modulation is required in the display control circuit 12.

In the case of brightness modulation, as shown in Fig. 10A a digital-to-analog converter (hereinafter referred to as a DA converter) 16 for generating a voltage of an amplitude corresponding to a parameter value is provided after a display data memory 15 which stores parameter values obtained by the signal processing circuit, and thereby such voltage is sent as an image signal to the display 13.

In the case of displaying parameter values with colors, as shown in Fig. 10B a code converting circuit 17 for the primaries (primary colours) of a colour display (usually, a color television receiver), which is required for expressing the colors assigned to values of parameters, is provided after a data memory 15 for display. DA converters 18 and 20 for converting outputs of code converting circuit 17 relating to each primary colour are provided after such code converting circuit 17 and moreover, if the display requires, a color encoder 21 is provided for generating a composite color signal in correspondence to the output voltages of each DA converter in order to send a signal to the color display 13 of Fig. 6 or 8. A synchronization signal is naturally necessary for display on the TV.

Provision of distribution of parameters such as $t_0$, $\overline{\Delta f}$, $m_2$, $\tau_0$ obtained on a single-dimensional ultrasonic scanning line is described above, but a two- or three-dimensional distribution can also be provided.

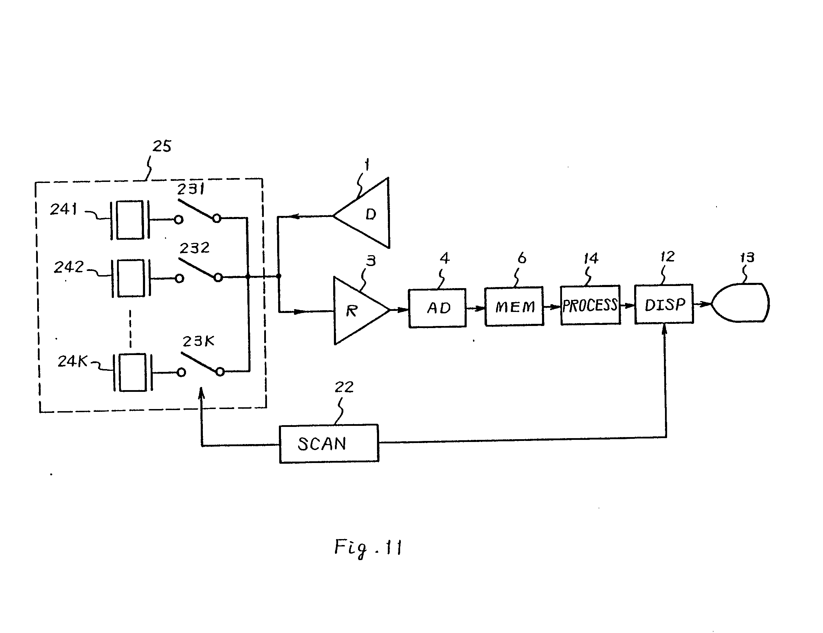

Fig. 11 illustrates an embodiment for providing such distribution. In Fig. 11, component elements corresponding to elements in Fig. 8 (or Fig. 6) are given the same reference signs. Fig. 11 shows an embodiment which is a so-called electronic scanning ultrasonic diagnosis apparatus. In Fig. 11, 25 is a probe for electronic scanning consisting of an arrangement of vibration units 241, 242, . . ., 14K and vibration unit selection switches 231, 232, . . ., 23K. 22 is a scanning control circuit which causes the ultrasonic wave beam to be scanned in a direction through the arrangement by turning the switches 231, 232, . . ., 23K ON and OFF in a selected sequence, and which writes results of signal processing into memory addresses for display in correspondence to the position of arrangement direction of ultrasonic wave beam. The scanning control circuit turns the vibration units on in a controlled sequence, so that they emit ultrasonic wave beams in a controlled sequence to scan (to provide respective ultrasonic scanning lines, one for each vibration unit) the medium under observation. The results of signal processing in relation to received signals corresponding to each vibration unit (corresponding to each scanning line) are placed in memory addresses such that they are displayed in the proper position in relation to results corresponding to each other scanning line. A two-dimensional distribution of parameters $t_0$, $\overline{\Delta f}$, $m_2$, $\tau_0$ can be obtained by writing such parameters into a frame memory in the display 12 by a method described above, for each change of position of ultrasonic wave beam with the control of scanning control circuit. A two dimensional display of a parameter (e.g. $t_0$, $\overline{\Delta f}$, etc) is obtained by writing parameter values into a frame memory of the display 12 in locations corresponding to the scanning lines, and positions along each scanning lines, to which the values refer.

Such a frame memory may be provided in place of the data memory for display in Fig. 10A or 10B in order to store two-dimensional parameter data. Although omitted from the above explanation, a beam focusing means such as a dynamic focussing can, of course, be executed for the control of ultrasonic wave beam.

The above explanation concerns electronic scanning but, of course, a mechanical scanning system can be adopted. Two-dimensional distributions of parameters can be obtained as described above, but three-dimensional distributions of parameters can further be obtained by moving the probe 25 in a direction at a right angle to the arrangement of vibration units (e.g. by moving the probe 25 transversely of a line along which the vibration units are arranged one after another in turn). The pitch of movement of the probe is controlled or measured. Two-dimensional distributions of parameters are stored in different frame memories for each movement — for each position of the probe at which ultrasonic wave beams are sent out by the vibration units — (or in different blocks formed by dividing one frame memory into a plurality of blocks), and a result is displayed in line on the same screen.

The waveform and spectrum, etc, of a reflected ultrasonic wave can be altered greatly by only a small difference in the structure of the reflecting medium (tissues). Therefore, it is often required, for obtaining stable data (parameter values), to obtain an average data value corresponding to a range of several millimeters square, even if space resolution is a little degraded. In cases where average data values are obtained embodiments of the present invention with constitutions as illustrated in Figs. 6 and 8 to 11 can be used: it is required only to modify the programming of the signal processing circuit 14 (and scanning control circuit 22).

As indicated above, with embodiments of this invention, discrimination in relation to thin tissue regions can be realised more accurately than previously by using the frequency intervals appearing in spectrum scalloping, which indicate "roughness" of the structure of the tissue region, or by using the inverse of such frequency intervals, in place of an attenuation characteristic. In other words, measurement with high resolution can be realised in the depth direction of a medium (body) to be observed.

In the apparatus according to the invention the means for obtaining average value of interval of above scalloping or inverse number of it is capable of obtaining a cepstrum of obtained power spectrum and also capable of obtaining an inverse number $1/t_0$ of frequency which gives almost the peak value except for the origin, of the quefrency $t_0$ which gives almost the peak value.

## Claims

1. Apparatus for transmitting an ultrasonic wave into a medium and for receiving and processing the ultrasonic wave as reflected in the medium, for obtaining a value of a parameter which value is dependent upon the spacing between small reflecting bodies dispersedly distributed in the region of the medium to be observed and characterises the region of the medium to be observed, the apparatus comprising:

(a) means (5, 6) for extracting a time section of a receiving signal corresponding to the ultrasonic wave as reflected in the medium,

(b) means (7) for obtaining a power spectrum of the extracted time section of the receiving signal,

(c) means (8) for obtaining a logarithmic power spectrum from the said power spectrum, and

(d) means (9) for obtaining a cepstrum of the logarithimic power spectrum, characterised in that the apparatus further comprises

(e) means (10) for detecting a quefrency ($t_0$) corresponding approximately to a peak value, other than at the origin, of the cepstrum, and

(f) means (11) for obtaining a nth-order moment $M_n$ (n = 1, 2, 3 . . .) of a restricted range of the cepstrum around the said quefrency ($t_0$).

2. Apparatus as claimed in claim 1, wherein the said means (11) for obtaining an nth order moment $M_n$ are operable to obtain a second order moment

$$M_2 = \int_{t_0-T}^{t_0+T} (t-t_0)^2 \, |C(t)|^2 \cdot dt$$

where $t_0$ is the said quefrency, $|C(t)|^2$ is the said cepstrum, and $t_0 + T$ and $t_0 - T$ indicate the limits of the said restricted range around the said quefrency.

3. A method of characterising a region of a medium to be observed, comprising transmitting an ultrasonic wave into a medium and receiving and processing the ultrasonic wave as reflected in the medium, and obtaining a value of a parameter which value is dependent upon the spacing between small reflecting bodies dispersedly distributed in a region of the medium to be observed and characterises the region of the medium to be observed, the method comprising:

(a) extracting a time section of a receiving signal corresponding to the ultrasonic wave as reflected in the medium,

(b) obtaining a power spectrum of the extracted time section of the receiving signal,

(c) obtaining a logarithmic power spectrum from the said power spectrum, and

(d) obtaining a cepstrum of the logarithmic power spectrum, characterised by

(e) detecting a quefrency $(t_0)$ corresponding approximately to a peak value, other than at the origin, of the cepstrum, and

(f) obtaining an nth-order moment $M_n$ $(n = 1, 2, 3 \ldots)$ of a restricted range of the cepstrum around the said quefrency $(t_0)$.

4. A method as claimed in claim 3, wherein as the said nth order moment $M_n$ a second order moment

$$M_2 = \int_{t_0-T}^{t_0+T} (t-t_0)^2 \, |C(t)|^2 \cdot dt$$

is obtained,

where $t_0$ is the said quefrency, $|C(t)|^2$ is the said cepstrum, and $t_0 + T$ and $t_0 - T$ indicate the limits of the said restricted range around the said frequency.

## Patentansprüche

1. Vorrichtung zum Senden einer Ultraschallwelle in ein Medium und zum Empfangen und Verarbeiten der in dem Medium reflektierten Ultraschallwelle, um einen Wert eines Parameters zu erhalten, welcher Wert abhängig ist von dem Abstand zwischen kleinen reflektierenden Körpern, die verstreut in einem Bereich des zu beobachtenden Mediums verteilt sind, und den Bereich des zu beobachtenden Mediums charakterisiert, welche Vorrichtung umfaßt:

(a) Einrichtungen (5, 6) zum Extrahieren eines Zeitabschnittes eines Empfangssignales, welches der in dem Medium reflektierten Ultraschallwelle enspricht,

(b) Einrichtungen (7) zum Erhalten eines Energiespektrums des extrahierten Zeitschnittes des Empfangssignales,

(c) Einrichtungen (8) zum Erhalten eines logarithmischen Leistungsspektrums von dem genannten Leistungsspektrum, und

(d) Einrichtungen (9) zum Erhalten eines Cepstrum des logarithmischen Leistungsspektrums, dadurch gekennzeichnet, daß die Vorrichtung ferner umfaßt:

(e) Einrichtungen (10) zum Detektieren einer Quefrency $(t_0)$, die etwa einem Spitzenwert, ein anderer als bei dem Ursprung, des Cepstrum enspricht, und

(f) Einrichtungen (11) zum Erhalten des Momentes $M_n$ $(n = 1, 2, 3, \ldots)$ n-ter Ordnung eines beschränkten Bereichs des Cepstrum um die genannte Quefrency $(t_0)$.

2. Vorrichtung nach Anspruch 1, bei der die genannte Einrichtung (11) zum Erhalten des Momentes $M_n$ n-ter Ordnung betriebbar ist, um ein Moment zweiter Ordnung

$$M_2 = \int_{t_0-T}^{t_0+T} (t-t_0)^2 \, |C(t)|^2 \cdot dt$$

zu erhalten, wobei $t_0$ die genannte Frequenz ist, $|C(t)|^2$ das genannte Cepstrum ist und $t_0 + T$ und $t_0 - T$ die Grenzen des genannten beschränkten Bereiches um die genannte Quefrency anzeigen.

3. Verfahren der Charakterisierung eines Bereiches eines zu beobachtenden Mediums, mit dem Senden einer Ultraschallwelle in ein Medium und Empfangen und Verarbeien der Ultraschallwelle, wie sie in dem Medium reflektiert wird und Erhalten eines Wertes eines Parameters, welcher Wert von dem Abstand zwischen kleinen reflektierenden Körpern abhängt, die verstreut in einem Bereich des zu beobachtenden Mediums verteilt sind, und den Bereich des zu beobachtenden Mediums charakterisiert, welches Verfahren umfaßt:

(a) Extrahieren eines Zeitabschnittes eines Empfangssignales, welches der Ultraschallwelle enspricht, wie sie in dem Medium reflektiert wird,

(b) Erhalten eines Leistungsspektrums des extrahierten Zeitschnittes des Empfangssignales,

(c) Erhalten eines logarithmischen Leistungsspektrums von dem genannten Leistungsspektrum und

(d) Erhalten eines Cepstrum des logarithmischen Leistungsspektrums, gekennzeichnet durch

(e) Detektieren einer Quefrency ($t_0$), die etwa einem Spitzenwert, ein anderer als bei dem Ursprung, des Cepstrum entspricht und

(f) Erhalten eines Momentes $M_n$ n-ter Ordnung (n = 1, 2, 3 ...) eines beschränkten Bereichs des Cepstrum um die genannte Quefrency ($t_0$).

4. Verfahren nach Anspruch 3, bei dem als das genannte Moment n-ter Ordnung $M_n$ ein Moment zweiter Ordnung

$$M_2 = \int_{t_0 - T}^{t_0 + T} (t - t_0)^2 \, |C(t)|^2 \cdot dt$$

erhalten wird,

wobei $t_0$ die genannte Quefrency ist, $|C(t)|^2$ das genannte Cepstrum ist und $t_0 + T$ und $t_0 - T$ die Grenzen des genannten beschränkten Bereichs um die genannte Quefrency anzeigen.

**Revendications**

1. Dispositif pour transmettre une onde ultrasonore dans un milieu et pour recevoir et traiter l'onde ultrasonore réfléchie dans le milieu, pour obtenir une valeur d'un paramètre, cette valeur étant fonction de l'espacement entre en petits corps réfléchissants répartis de façon dispersée dans une région du milieu à observer et caractérisant la région du milieu à observer, le dispositif comprenant:

(a) un moyen (5, 6) pour extraire une section de temps d'un signal de réception correspondant à l'onde ultrasonore réfléchie dans le milieu,

(b) un moyen (7) pour obtenir un spectre de puissance de la section de temps extraite du signal de réception,

(c) un moyen (8) pour obtenir un spectre de puissance logarithmique à partir du spectre de puissance, et

(d) un moyen (9) pour obtenir un "cepstre" du spectre de puissance logarithmique, caractérisé en ce qu'il comprend en outre

(e) un moyen (10) pour détecter une "quéfrence" ($t_0$) correspondant approximativement à une valeur de crête, autre qu'à l'origine, du "cepstre", et

(f) un moyen (11) pour obtenir un moment $M_n$ d'ordre n (n = 1, 2, 3, ...) d'une plage limitée du "cepstre" autour de ladite "quéfrence" ($t_0$).

2. Dispositif selon la revendication 1, dans lequel ledit moyen (11) pour obtenir un moment $M_n$ d'ordre n peut être mis en fonctionnement pour obtenir un moment d'ordre deux

$$M_2 = \int_{t_0 - T}^{t_0 + T} (t - t_0)^2 \, |C(t)|^2 \cdot dt$$

où $t_0$ est la "quéfrence", $|C(t)|^2$ est le "cepstre", et ($t_0 + T$) et ($t_0 - T$) indiquent les limites de la plague limitée autour de la "quéfrence".

3. Procédé de caractérisation d'une région d'un milieu à observer, consistant à transmettre une onde ultrasonore dans un milieu et à recevoir et traiter l'onde ultrasonore réfléchie dans le milieu, et à obtenir une valeur d'un paramètre, cette valeur étant fonction de l'espacement entre de petits corps réfléchissants répartis de façon dispersée dans une région du milieu à observer et caractérisant la région du milieu à observer consistant à:

(a) extraire une section de temps d'un signal de réception correspondant à l'onde ultrasonore réfléchie dans le milieu,

(b) obtenir un spectre de puissance de la section de temps extraite du signal de réception,

(c) obtenir un spectre de puissance logarithmique à partir du spectre de puissance, et à

(d) obtenir un "cepstre" du spectre de puissance logarithmique,
caractérisé en ce qu'il consiste à

(e) détecter une "quéfrence" ($t_0$) correspondant approximativement à une valeur de crête, autre qu'à l'origine, du "cepstre", et à

(f) obtenir un moment $M_n$ d'ordre n ( n = 1, 2, 3, . . .) d'une plage limitée du "cepstre" autour de ladite "quéfrence" ($t_0$).

4. Procédé selon la revendication 3, dans lequel on obtient comme moment $M_n$ d'ordre n, un moment d'ordre deux

$$M_2 = \int_{t_0-T}^{t_0+T} (t-t_0)^2 |C(t)|^2 \cdot dt$$

où $t_0$ est la "quéfrence", $|C(t)|^2$ est le "cepstre", et ($t_0 + T$) et ($t_0 - T$) indiquent les limites de la plage limitée autour de la "quéfrence".

Z = 0                    Z = Z₁                    Z = Z₂

A(Z1, f)

A(Z2, f)

105

104

101          102

103

Fig . 1

Fig.2A

$$\tau = \frac{2d}{C}$$

Fig.2B

$|G(f)|^2$

Fig.2C

Fig.2D

$|R(f)|^2$

$|G(f)|^2$

$0$

$f$

$\Delta f_1$ | $\Delta f_2$ | $\Delta f_3$ | $--$ | $--$ | $--$ | $--$ | $\Delta f_n$

$$\overline{\Delta f} = \frac{1}{n} \sum_{i=1}^{n} \Delta f_i$$

Fig. 3

3

Fig. 4

POWER CEPSTRUM

Fig . 5

Fig. 6

Fig. 7

7

Fig . 8

Fig. 9A

Fig. 9B

Fig. 10A

Fig. 10B

Fig. 11